# EUROPÄISCHE PATENTSCHRIFT

(11) **EP 4 107 659 B1**
(45) Veröffentlichungstag und Bekanntmachung des Hinweises auf die Patenterteilung: **07.01.2026**
(21) Anmeldenummer: 21719024.8
(22) Anmeldetag: 19.02.2021
(51) Int. Cl.: G01S 17/931, G01S 7/497, G01S 7/40, G01M 17/007, G01S 13/931, G06V 20/56

(54) **SYSTEM UND VERFAHREN ZUM TESTEN EINES FAHRERASSISTENZSYSTEMS EINES KRAFTFAHRZEUGS**
SYSTEM AND METHOD FOR TESTING A DRIVER ASSISTANCE SYSTEM ON A MOTOR VEHICLE
SYSTÈME ET PROCÉDÉ POUR CONTRÔLER UN SYSTÈME D'AIDE À LA CONDUITE D'UN VÉHICULE AUTOMOBILE

(30) Priorität: 20.02.2020 AT 501212020
(43) Veröffentlichungstag der Anmeldung: 28.12.2022
(73) Patentinhaber: AVL List GmbH, 8020 Graz (AT)
(72) Erfinder: DUESER, Tobias, 77815 Bühl (DE)
(74) Vertreter: Hahner, Ralph
(86) Internationale Anmeldenummer: PCT/AT2021/060056
(87) Internationale Veröffentlichungsnummer: WO 2021/163745

(56) Entgegenhaltungen:
- WO-A1-2013/174974
- WO-A1-2019/119012
- DE-A1- 102014 118 625
- DE-A1- 102018 205 804

## Beschreibung

Die vorliegende Erfindung betrifft ein System zum Testen eines Fahrerassistenzsystems eines Kraftfahrzeugs und ein Verfahren zum Testen eines Fahrerassistenzsystem eines Kraftfahrzeugs auf einem Fahrzeugprüfstand.

Moderne Fahrerassistenzsysteme sind aufgrund des durch sie gebotenen Komforts und der durch sie erhöhten Fahrsicherheit mittlerweile weit verbreitet. Die Entwicklung solcher Systeme basiert zunehmend auf dem sogenannten "from road to rig"-Ansatz, in dessen Rahmen Tests der Fahrerassistenzsysteme nicht in einer realen Umgebung, sondern in einer simulierten Umgebung durchgeführt werden.

Der "from road to rig"-Ansatz wird beispielsweise in sogenannten "Vehicle-in-the-Loop"-Anwendungen umgesetzt, in denen ein Fahrzeug wie in einer realen Umgebung betrieben werden kann, die Wechselwirkung des Fahrzeugs mit seiner Umgebung jedoch künstlich und damit in einer kontrollierten Weise erzeugt werden. So ist es beispielsweise bekannt, Simulationsvorrichtungen an oder vor Sensoren, die zur Messung von Abständen eingerichtet sind, am Fahrzeug anzuordnen, um Objekte in verschiedenen Abständen zum Fahrzeug zu simulieren. Es ist damit möglich, die Reaktionen eines Fahrerassistenzsystems auf die Objekte und deren Abstände zum Fahrzeug zu testen.

WO2019/119012A1 zeigt ein Verfahren zur Analyse eines Automatisierungssystems, insbesondere eines Fahrerassistenzsystems in einem Fahrzeug.

DE102014118625A1 zeigt eine Sensoranordnung für einen Prüfstand eines Fahrerassistenzsystems eines Kraftfahrzeugs, mit einem Sensor, welcher dazu ausgelegt ist, ein Sensorsignal auszusenden und das von einem Objekt in einem Umgebungsbereich des Kraftfahrzeugs reflektierte Sensorsignal als Echosignal zu empfangen.

DE 10 2018 205804 A1 offenbart eine Steuergerätetesteinrichtung zum Testen, Absichern und/oder Entwickeln einer Funktion oder eines Steuerprogramms eines Fahrerassistenzsystems oder eines autonomen Fahrzeugs.

WO 2013/174 974 A1 offenbart das unabhängige Testen eines Fahrzeugs auf einer realen Teststrecke mit einer Prüfsteuereinheit. Die Prüfsteuereinheit kann am Fahrzustandsaktuator oder auch am Fahrzeug angeordnet sein.

Es ist eine Aufgabe der Erfindung, eine verbesserte Überprüfung eines Fahrerassistenzsystems auf einem Fahrzeugprüfstand zu ermöglichen.

Diese Aufgabe wird gelöst durch ein System zum Testen eines Fahrerassistenzsystems eines Kraftfahrzeugs und ein Verfahren zum Testen eines Fahrerassistenzsystems eines Kraftfahrzeugs auf einem Fahrzeugprüfstand gemäß den unabhängigen Ansprüchen.

Ein erster Aspekt der Erfindung betrifft ein System zum Testen eines Fahrerassistenzsystems eines Kraftfahrzeugs, wobei ein Fahrerassistenzsystem eine Steuerungseinheit zur Verarbeitung von Sensorsignalen aufweist, welche eingerichtet ist, Sensorsignale wenigstens eines Umgebungssensors des Kraftfahrzeugs zu verarbeiten, wobei der Umgebungssensor dazu eingerichtet ist, Umgebungsinformationen zu erfassen und in Sensorsignale umzuwandeln. Das System weist einen Fahrzeugprüfstand auf, der eingerichtet ist, wenigstens einen Antriebsstrang des Kraftfahrzeugs zu betreiben, wenigstens ein von dem Kraftfahrzeug räumlich getrenntes Simulationsmodul, wobei das Simulationsmodul wenigstens einen Umgebungssensor aufnimmt und eine diesem Umgebungssensor zugeordnete Stimulationseinrichtung aufweist. Das Simulationsmodul ist als eine von dem Kraftfahrzeug oder dem Fahrzeugprüfstand unabhängige bauliche Einheit ausgebildet. Insbesondere ist ein Umgebungssensor eine Anordnung aus mehreren Umgebungssensoren, wobei dieser Anordnung eine einzige Simulationseinrichtung zugeordnet ist oder jedem der einzelnen Umgebungssensoren der Anordnung eine Simulationseinrichtung zugeordnet ist. Der vom Simulationsmodul aufgenommene Umgebungssensor entspricht, insbesondere funktional und/oder strukturell, dem Umgebungssensor des Kraftfahrzeugs oder ist der Umgebungssensor des Kraftfahrzeugs. Das Simulationsmodul ist mit der Steuerungseinheit des Fahrerassistenzsystems zur Signalübertragung verbunden, um ein Sensorsignal von dem Simulationsmodul an die Steuerungseinheit zu übertragen. Diese Verbindung zur Signalübertragung ist insbesondere als unmittelbare Verbindung oder mittelbar über eine Simulationsplattform bzw. eine Simulationsschnittstelle ausgebildet. Bevorzugt ist die signaltechnische Verbindung über eine Integrationsplattform gewährleistet. Ein zweiter Aspekt der Erfindung betrifft ein Verfahren zum Testen eines Fahrerassistenzsystems eines Kraftfahrzeugs auf einem Fahrzeugprüfstand, aufweisend die Schritte des Simulierens einer Testumgebung mittels wenigstens eines Simulationsmoduls, wobei das Simulationsmodul wenigstens einen Umgebungssensor des Kraftfahrzeugs aufnimmt; wobei der aufgenommene Umgebungssensor, insbesondere funktional und/oder strukturell, wenigstens einem Umgebungssensor des Kraftfahrzeugs entspricht oder der wenigstens eine Umgebungssensor des Kraftfahrzeugs ist, und des Erzeugens eines Sensorsignals mittels des wenigstens einen Simulationsmoduls zur Verarbeitung durch eine Steuerungseinheit des Fahrerassistenzsystems des Kraftfahrzeugs. Des Weiteren weist das Verfahren den Schritt des Betreibens eines wenigstens des Antriebsstranges des Kraftfahrzeugs auf dem Fahrzeugprüfstand unter Einsatz des Fahrerassistenzsystems auf der Grundlage des Sensorsignals auf.

Ein dritter Aspekt der Erfindung betrifft ein Verfahren zum Testen eines Fahrerassistenzsystems eines Kraftfahrzeugs auf einer Teststrecke, aufweisend die folgenden Schritte:
Simulieren einer Testumgebung mittels wenigstens eines Simulationsmoduls, wobei das Simulationsmodul wenigstens einen Umgebungssensor des Kraftfahrzeugs aufnimmt; wobei der aufgenommene Umgebungssensor, insbesondere funktional und/oder strukturell, wenigstens einem Umgebungssensor des Kraftfahrzeugs entspricht oder der wenigstens eine Umgebungssensor des Kraftfahrzeugs ist;
Erzeugen eines Sensorsignals mittels des wenigstens einen Simulationsmoduls zur Verarbeitung durch eine Steuerungseinheit des Fahrerassistenzsystems **des** Kraftfahrzeugs; und
Betreiben des Kraftfahrzeugs auf der Teststrecke unter Einsatz des Fahrerassistenzsystems auf der Grundlage des mittels des wenigstens einen Simulationsmoduls erzeugten Sensorsignals.

Ein Umgebungssensor im Sinne der Erfindung ist insbesondere eine Vorrichtung zum Erfassen und/oder Messen von physikalischen Größen aus seiner Umgebung, insbesondere dem Umfeld des Kraftfahrzeugs. Vorzugsweise ist der Umgebungssensor dazu eingerichtet, die Umgebung bzw. das Umfeld des Kraftfahrzeugs zu sondieren, insbesondere abzutasten. Der Umgebungssensor weist vorzugsweise einen Aufnehmer und einen Signalumwandler auf, wobei der Aufnehmer vorzugsweise auf die physikalische oder chemische Messgröße unmittelbar anspricht bzw. deren Eigenschaft quantitativ und/oder qualitativ erfasst und der Signalumwandler diese erfasste Eigenschaft in ein vorzugsweise elektrisch weiterleitbares Signal umwandelt.

Der Umgebungssensor ist vorzugsweise als aktiver Sensor, insbesondere als Infrarotkamera, Ultraschallsensor, Radarsensor und/oder Lidarsensor ausgebildet und insbesondere dazu eingerichtet, Schallwellen bzw. elektromagnetische Wellen auszusenden und von der Umgebung bzw. dem Umfeld des Kraftfahrzeugs beeinflusste, insbesondere an Objekten reflektierte, Schallwellen bzw. elektromagnetische Wellen zu empfangen. Weiter bevorzugt ist ein Umgebungssensor als passiver Sensor bzw. Empfänger, insbesondere als Kamera oder GPS-Empfänger ausgebildet. Der Umgebungssensor ist vorzugsweise dazu eingerichtet, anhand eines empfangenen Messsignals, insbesondere eines Antwortsignals der Stimulationseinrichtung, ein Sensorsignal zu erzeugen, welches das Messsignal und/oder die in Ihm enthaltene Information charakterisiert.

Ein Simulationsmodul im Sinne der Erfindung weist insbesondere einen Umgebungssensor und eine diesem zugeordnete Stimulationseinrichtung auf. Die Stimulationseinrichtung ist vorzugsweise dazu eingerichtet, dem ihr zugeordneten Umgebungssensor ein Messsignal, insbesondere ein Antwortsignal und/oder eine Messgröße zur Verfügung zu stellen. Mittels des von der Stimulationseinrichtung generierten bzw. modulierten Messignals wird insbesondere eine Umgebung, vorzugsweise eine Fahrzeugumgebung oder eine Fahrsituation des Kraftfahrzeugs, simuliert. Dieses Messignal ist vorzugsweise durch eine physikalische Messgröße charakterisiert, die wiederum vorzugsweise von dem Aufnehmer des Umgebungssensors erfasst und vom Signalumwandler des Umgebungssensors in ein Sensorsignal umgewandelt wird. Vorzugsweise ist jedem Umgebungssensor eines Simulationsmoduls wenigstens eine Stimulationseinrichtung zugeordnet, besonders bevorzugt in einer Eins-zu-eins-Zuordnung, um eine möglichst spezifische Bereitstellung eines Messsignals bzw. Antwortsignals für den Umgebungssensor zu ermöglichen.

Ein Fahrerassistenzsystem im Sinne der Erfindung ist vorzugsweise ein System für assistiertes Fahren, ein System für teilautomatisiertes Fahren, ein System für hochautomatisiertes Fahren, ein System für vollautomatisiertes Fahren oder ein System für autonomes Fahren, insbesondere entsprechen diese jeweiligen Systeme zum automatisierten Fahren der Klassifizierung und/oder Definition der Norm SAE J3016.

Ein Fahrzeugprüfstand im Sinne der Erfindung ist insbesondere dazu eingerichtet, einen Antriebsstrang des Kraftfahrzeugs und/oder Teile hiervon bzw. Komponenten des Kraftfahrzeugs oder das Kraftfahrzeug zu betreiben, insbesondere auch eine Lenkung des Kraftfahrzeugs. Vorzugsweise ist der Fahrzeugprüfstand ein Rollenprüfstand oder ein Antriebsstrangprüfstand. Beim Betrieb des Antriebstrangs und/oder des Kraftfahrzeugs auf dem Fahrzeugprüfstand wird vorzugsweise eine reale Fahrsituation simuliert. Insbesondere wird ein realer Betrieb des Kraftfahrzeugs abgebildet bzw. simuliert, insbesondere die physikalischen Kräfte und Umgebungsbedingungen denen ein Kraftfahrzeug bei einer realen Fahrt ausgesetzt ist. Demnach wirken an dem Kraftfahrzeug auf dem Fahrzeugprüfstand Kräfte, welche an eine an dem Kraftfahrzeug angeordnete Stimulationseinheit übertragen werden bzw. werden könnten. Dadurch können insbesondere empfindliche Komponenten von Stimulationseinrichtungen beschädigt werden oder eine Signalübertragung zwischen Stimulationseinheit zu ihrem zugeordneten Umgebungssensor kann durch Vibrationen beeinträchtigt sein.

Die Erfindung basiert insbesondere auf dem Ansatz, das Fahrerassistenzsystem in einem Kraftfahrzeug auf dem Fahrzeugprüfstand zumindest teilweise auf der Grundlage von Sensorsignalen zu betreiben, die eine simulierte Umgebung bzw. ein simuliertes Verkehrsszenario, charakterisieren. Vorzugsweise werden die Sensorsingale, welche von der Steuerungseinheit des Fahrerassistenzsystems verarbeitet werden, von dem Simulationsmodul erzeugt. Die Simulation der Umgebung bzw. der Fahrsituation, insbesondere die Erzeugung des Sensorsignals, wird dabei vorzugsweise durch das Simulationsmodul realisiert. Insbesondere wird das Sensorsignal durch den vom Simulationsmodul aufgenommenen Umgebungssensor, und zumindest nicht ausschließlich durch die in oder an dem Kraftfahrzeug angeordneten Umgebungssensoren, abgebildet. Vorzugsweise weist ein erfindungsgemäßes System mehrere Simulationsmodule auf, deren Umgebungssensoren vorzugsweise auf unterschiedlichen Messprinzipien beruhen. Ein derart ausgebildetes System bietet eine hohe Flexibilität und die Möglichkeit ein Fahrerassistenzsystem umfassend zu prüfen.

Besonders bei einer Simulation einer Umgebung beruhend auf Sensorsignalen mehrerer Umgebungssensoren, kann jedem Umgebungssensor jeweils eine Stimulationseinheit zugeordnet sein. Aufgrund der beschränkten räumlichen Gegebenheiten an oder um ein zu testendes Kraftfahrzeug auf dem Fahrzeugprüfstand ist eine Installation mehrerer Stimulationseinheiten schwierig zu realisieren, gerade wenn die verschiedenen Stimulationseinheiten jeweils zugehörige Abschirmungsvorrichtungen aufweisen oder die Zugänglichkeit der Umgebungssensoren nur eingeschränkt vorhanden ist.

Das erfindungsgemäße Simulationsmodul ist als eine separate bauliche Einheit des, vorzugsweise modular ausgebildeten, Systems ausgebildet, die unabhängig von dem Kraftfahrzeug bzw. dem Fahrzeugprüfstand positioniert und betrieben werden kann. Mittels des Simulationsmoduls kann die Erzeugung des Sensorsignals erfindungsgemäß räumlich unabhängig von der realen bzw. gebrauchsmäßigen Position des Umgebungssensors stattfinden. Durch die physische und räumliche Abkopplung des Simulationsmoduls von dem Kraftfahrzeug wird insbesondere die Simulation der Umgebung durch das Simulationsmodul verbessert. Damit ist es möglich, insbesondere das Kraftfahrzeug unverändert, insbesondere ohne Anbauten oder Aufbauten für Stimulationseinheiten für Umgebungssensoren, auf dem Fahrzeugprüfstand zu betreiben und/oder zu testen.

In einer bevorzugten Ausführungsform ist das Simulationsmodul dazu ausgebildet, Sensorsignale zu erzeugen, um Umgebungsinformationen aus der Perspektive des Umgebungssensors des Kraftfahrzeugs abzubilden. Der Steuerungseinheit wird so eine besonders präzise Simulation einer Umgebung zur Verarbeitung bereitgestellt. Derartige Sensorsignale beinhalten vorzugsweise Informationen über Wechselwirkungen mit weiteren Umgebungssensoren des Kraftfahrzeugs. Die Überprüfung von Umgebungssensoren, insbesondere einzelnen Umgebungssensoren, bzw. deren Einfluss auf das Fahrerassistenzsystem kann so besonders realitätsnah abgebildet werden.

In einer weiteren bevorzugten Ausführungsform ist das Simulationsmodul ausschließlich mittels einer Verbindung zur Signalübertragung mit dem Fahrzeugprüfstand, insbesondere mit der Steuerungseinheit verbunden. Vorzugsweise ist diese Verbindung in Form eines oder mehrerer Leitungskabel, eines Bussystems, insbesondere eines Feldbusses oder mittels einer drahtlosen Verbindung zur Datenübertragung realisiert. Somit ist keine zusätzliche Schnittstelle zur Signalübertragung nötig.

Dadurch wird eine physische und räumliche Trennung von Simulationsmodul und Fahrzeugprüfstand ermöglicht. Hierdurch kann eine Übertragung von Bewegungen, insbesondere von Stößen oder Vibrationen, von dem Kraftfahrzeug bzw. dem Fahrzeugprüfstand auf das Simulationsmodul vermieden oder sogar gänzlich verhindert werden. Die Stimulation des Umgebungssensors des Simulationsmoduls durch die Stimulationseinrichtung kann somit ohne physikalische Beeinträchtigung erfolgen, der Umgebungssensor erfasst das von der Stimulationseinrichtung ausgesandte Messsignal vorzugsweise störungsfrei und erzeugt somit ein Sensorsignal, welches das simulierte Umgebungsszenario vorzugsweise unverfälscht wiedergibt.

In einer weiteren bevorzugten Ausführungsform ist der vom Simulationsmodul aufgenommene Umgebungssensor mit dem von ihm ersetzen Umgebungssensor des Fahrerassistenzsystems identisch. Wird das Sensorsignal, welches der Steuerungseinheit zur Verarbeitung bereitgestellt wird, von einem identischen Umgebungssensoren bereitgestellt, ist eine besonders realitätsnahe Signalgüte im Überprüfungskontext sichergestellt. Insbesondere ist der vom Simulationsmodul aufgenommene Umgebungssensor mit dem von ihm ersetzen Umgebungssensor des Fahrerassistenzsystems baugleich und/oder zumindest funktionsgleich ausgebildet.

In einer weiteren bevorzugten Ausführungsform weist das System zumindest zwei Simulationsmodule auf, wobei sich wenigstens zwei dieser Simulationsmodule in dem von ihnen aufgenommenen Umgebungssensoren angewandten Messprinzip unterscheiden.

Unter Einsatz verschiedener Simulationsmodule können die einzelnen Umgebungssensoren und ihr Einfluss auf das Fahrerassistenzsystem, insbesondere unabhängig voneinander, getestet werden. Gegenseitige Beeinflussung und/oder Wechselwirkungen von Umgebungssensoren, welche insbesondere durch Interferenzen und Überlappungen von Messbereichen zum Tragen kommen, können so verringert oder sogar vermieden werden oder gezielt analysiert werden

Gleichermaßen kann vorgesehen sein, in einem System mehrere Simulationsmodule beruhend auf gleichen, unterschiedlichen oder einer Kombination von gleichen und unterschiedlichen Messprinzipien einzusetzen.

In einer weiteren bevorzugten Ausführungsform weist das wenigstens eine Simulationsmodul wenigstens zwei Umgebungssensoren auf, wobei sich zwei dieser Umgebungssensoren in dem von ihnen angewandten Messprinzip unterscheiden. Bei Einsatz von zwei oder mehreren Umgebungssensoren, insbesondere wenn diese auf unterschiedlichen Messprinzipien beruhen und insbesondere bei aktiver Signalaussendung durch den Umgebungssensor, können Messbereiche überlappen und Wechselwirkungen bzw. eine gegenseitige, insbesondere unerwünschte, Beeinflussung stattfinden. Um diese gegenseitige Beeinflussung bei einer Überprüfung des Fahrerassistenzsystems zu berücksichtigen, kann es vorteilhaft sein, diese Umgebungssensoren in relativer Nähe in einem einzigen Simulationsmodul anzuordnen um die Wechselwirkungen abzubilden.

Ferner kann vorgesehen sein, Umgebungssensoren beruhend auf gleichen, ähnlichen und/oder unterschiedlichen Kombination von diesen in einem eigenen Simulationsmodul vorzusehen, um deren Wechselwirkungen auf- und miteinander beim Testen des Fahrerassistenzsystems authentisch abzubilden bzw. zu berücksichtigen.

In einer weiteren bevorzugten Ausführungsform ist der wenigstens eine Umgebungssensor in einem Bauteil, insbesondere einem Bauteil des Kraftfahrzeugs, vorzugsweise der Karosserie des Kraftfahrzeugs, angeordnet und/oder verbaut, und dieses Bauteil ist von dem wenigstens einen Simulationsmodul aufnehmbar. Ein solches Bauteil kann, insbesondere als Ganzes von einem zu testenden Kraftfahrzeug demontiert und in oder an ein Simulationsmodul montiert werden. Alternativ kann ein zweites, insbesondere baugleiches Bauteil in oder an dem Simulationsmodul montiert sein.

Eine derartige Ausgestaltung des Simulationsmoduls ermöglicht eine besonders realitätsnahe Abbildung einer Umgebung mittels der erzeugten Sensorsignale, da Wechselwirkungen und bauliche Besonderheiten, die sich insbesondere aus der speziellen Positionierung der Umgebungssensoren in oder an dem Bauteil ergeben, abgebildet werden und bei der Verarbeitung durch die Steuerungseinheit berücksichtigt werden. Auch können Umgebungssensoren in Bauteilen derart angeordnet sein, dass sie in der Einbausituation im Kraftfahrzeug, insbesondere für eine Stimulation durch eine Stimulationseinrichtung nicht oder nicht gut zugänglich sind. Durch eine Demontage des Bauteils von dem Kraftfahrzeug oder durch Bereitstellen eines baugleichen Exemplars des Bauteils und Verwendung dieses Bauteils als Umgebungssensor des Simulationsmoduls, kann die wenigstens eine Stimulationseinrichtung einfacher zugeordnet bzw. platziert werden.

In einer weiteren bevorzugten Ausführungsform ist das Simulationsmodul, insbesondere der von der Simulationseinrichtung aufgenommene Umgebungssensor und die Stimulationseinrichtung, als bauliche Einheit ausgeführt, vorzugsweise von einem Gehäuse umfasst. Vorzugsweise weist ein Simulationsmodul mit einem Material, das insbesondere zum Absorbieren eines von Umgebungssensor ausgesendeten Signals geeignet ist, auf, sodass von Umgebungssensor ausgesendete Signale, die nicht unmittelbar auf die Stimulationseinrichtung treffen, absorbiert werden. Weiter vorzugsweise ist das Simulationsmodul derart abgeschirmt ausgebildet, dass eine Verbreitung des Messignals über das Simulationsmodul hinaus verringert, vorzugsweise vermieden wird. Eine individuelle, unverfälschte Betrachtung der einzelnen erzeugten Sensorsignale ist hierdurch begünstigt. Zudem ist eine Handhabung eines, mehrerer oder verschiedener Simulationsmodule innerhalb des Systems vereinfacht, da diese als bauliche Einheit leichter platziert und unabhängig voneinander betrieben werden können.

In einer weiteren bevorzugten Ausführungsform ist die Stimulationseinrichtung eingerichtet, vorzugsweise basierend auf einem Signal, welches von dem wenigstens einen von der Simulationseinrichtung aufgenommenen Umgebungssensor ausgesendet wird, ein Antwortsignal für den Empfang durch diesen Umgebungssensor zu erzeugen, wobei das Antwortsignal vorzugsweise basierend auf einer simulierten Testumgebung erzeugt wird.

In einer weiteren bevorzugten Ausführungsform weist das System wenigstens einen Signalumwandler, insbesondere einen Perception-Chip einer Kamera, wenigstens eines weiteren Umgebungssensors, auf. Der Signalumwandler ist eingerichtet, ein Sensorsignal an die Steuerungseinrichtung des Kraftfahrzeugs zu übertragen und das Sensorsignal auf Basis von Sensorrohdaten zu erzeugen, wobei die Sensorrohdaten in den Signalumwandler eingespeist werden und dieser das Sensorsignal erzeugt.

Vorzugsweise werden dem Signalumwandler Sensorrohdaten übermittelt, wobei die Sensorrohdaten von dem Signalumwandler aufzubereitende Informationen enthalten, welche die simulierte Umgebung charakterisieren. Üblicherweise weist ein Umgebungssensor einen Aufnehmer auf, welcher die Messgröße als physikalische Größe erfasst und diese Messung dem Signalumwandler, insbesondere in Form von Sensorrohdaten, zu Verfügung stellt, um ein Sensorsignal zu erzeugen. Werden dem Signalumwandler unmittelbar Sensorrohdaten zu Umwandlung zur Verfügung gestellt, so kann auf einen Aufnehmer des Umgebungssensors sowie eine Stimulationseinrichtung für den Umgebungssensor verzichtet werden. Beispielsweise kann ein Rohbild, insbesondere Bilddaten aus einer Simulation umfassend, unmittelbar an den Perception-Chip einer Kamera zur Verarbeitung übermittelt werden. Auf eine Optik der Kamera zu Aufnahme des Bildes kann somit verzichtet werden. Dadurch kann eine Erzeugung und/oder Bereitstellung des Sensorsignals für die Steuerungseinheit auf besonders einfache Weise erfolgen.

In einer weiteren bevorzugten Ausführungsform weist das System wenigstens eine Vorrichtung auf, die dazu eingerichtet ist, ein simuliertes Sensorsignal, insbesondere in Form von Objektlisten und/oder Objektdaten, zu erzeugen, und an die Steuerungseinheit des Fahrerassistenzsystems zu übertragen. Somit ist es möglich, Informationen, welche die simulierte Umgebung betreffen, der Steuerungseinheit direkt zur Verfügung zu stellen. In anderen Worten ausgedrückt, wird der Umgebungssensor simuliert. Somit bietet ein derart ausgebildetes System eine einfache, insbesondere zusätzliche Möglichkeit, Informationen in Form von simulierten Sensorsignalen an die Steuereinheit zum Betreiben des Fahrerassistenzsystems zu übermitteln, um komplexe Umgebungsszenarien auf einfache Weise abzubilden.

In einer bevorzugten Ausführungsform weist das Verfahren die weiteren Schritte des Montierens wenigstens eines Umgebungssensors an oder in dem wenigstens einen Simulationsmodul und des Zuordnens einer Stimulationseinrichtung zu diesem Umgebungssensor auf. Insbesondere kann ein mit dem Umgebungssensor des Kraftfahrzeugs identischer Umgebungssensor montiert werden, um so ein möglichst authentisches Sensorsignal für die Steuerungseinrichtung bereitzustellen. Durch das Montieren und Zuordnen von Umgebungssensor und Stimulationseinrichtung ist das Verfahren besonders flexibel und kann individuell an Testanforderungen angepasst werden. Insbesondere wird in einem optionalen weiteren Schritt der wenigstens eine Umgebungssensor und/oder die wenigstens eine Stimulationseinrichtung kalibriert und/oder die wenigstens eine Stimulationseinrichtung wird gegenüber dem wenigstens einen Umgebungssensor ausgerichtet, oder umgekehrt, um eine optimale und realitätsnahe Stimulation des oder der Umgebungssensoren zu erzielen.

In einer weiteren bevorzugten Ausführungsform weist das Verfahren den Schritt des Montierens eines Bauteils, insbesondere eines Bauteils des Kraftfahrzeugs, mit mindestens einem darin angeordneten und/oder verbauten Umgebungssensor in oder an dem wenigstens einen Simulationsmodul auf. Durch den Einsatz von Bauteilen des Fahrzeugs zum Erzeugen eines Sensorsignals, können Wechselwirkungen insbesondere zwischen dem Bauteil und dem bzw. den darin oder daran angebrachten Umgebungssensoren besonders realitätsnah abgebildet werden. Insbesondere kann ein Bauteil des Kraftfahrzeugs, wie beispielsweise eine Stoßstange mit darin verbauten Umgebungssensoren in dem Simulationsmodul montiert werden, um die simulierte Umgebung besonders präzise abzubilden.

In einer weiteren bevorzugten Ausführungsform weist das Verfahren den Schritt des Demontierens eines Bauteils des Kraftfahrzeugs mit mindestens einem darin angeordneten und/oder verbauten Umgebungssensor von dem Kraftfahrzeug auf, um ein Montieren dieses Bauteils in das Simulationsmodul zu ermöglichen. Die Verwendung des Bauteils mit dem oder den Umgebungssensoren des Kraftfahrzeugs als Umgebungssensor des Simulationsmoduls kann ein Umgebungssensor für das Simulationsmodul besonders einfach bereitgestellt werden.

In einer weiteren bevorzugten Ausführungsform weist ein erfindungsgemäßes Verfahren den Schritt des Unterbindens einer Signalübertragung des Umgebungssensors des Kraftfahrzeugs an die Steuerungseinrichtung auf. Hierzu kann der Umgebungssensor des Kraftfahrzeugs abgeklemmt, stumm geschalten und/oder ein entsprechender Eingang bzw. Anschluss der Steuerungseinheit stumm geschalten werden. Das Sensorsignal des Simulationsmoduls wird vorzugsweise anstatt eines Sensorsignal des von ihm ersetzen Umgebungssensors des Kraftfahrzeugs an die Steuerungseinheit übermittelt. Das Unterbinden der Signalübertragung des Umgebungssensors des Kraftfahrzeugs beugt zufälligen oder ungewollten Signalübermittlungen durch diesen Umgebungssensor vor.

In einer weiteren bevorzugten Ausführungsform ist der Umgebungssensor der Umgebungssensors des Kraftfahrzeugs.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten Aspekt der Erfindung und dessen vorteilhafte Ausgestaltung sowie umgekehrt.

Die Erfindung wird im Folgenden an Hand von nicht einschränkenden Ausführungsbeispielen, die in den Figuren dargestellt sind, näher erläutert. Darin zeigen wenigstens teilweise schematisch:
- **Fig. 1**: ein bevorzugtes Ausführungsbeispiel eines Systems zum Testen eines Fahrerassistenzsystems eines Kraftfahrzeugs; und
- **Fig. 2**: ein bevorzugtes Ausführungsbeispiel eines Verfahrens zum Testen eines Fahrerassistenzsystems eines Kraftfahrzeugs auf einem Fahrzeugprüfstand.

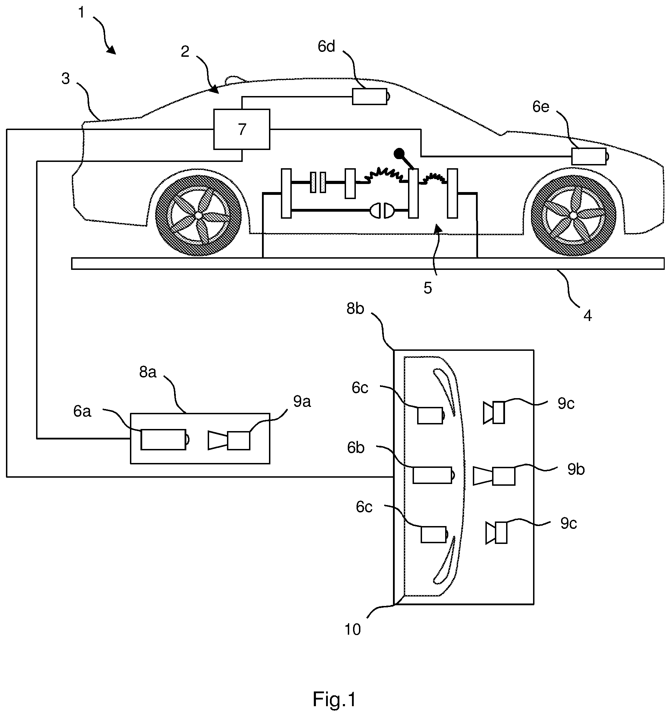

**Figur** 1 zeigt ein System 1 zum Testen eines Fahrerassistenzsystems 2 eines Kraftfahrzeugs 3. Das Kraftfahrzeug 3 ist auf einem Fahrzeugprüfstand 4 angeordnet, der dazu eingerichtet ist, wenigstens einen Antriebsstrang 5 des Kraftfahrzeugs 3 zu betreiben. Insbesondere ist der Fahrzeugprüfstand 4 dazu eingerichtet, das Kraftfahrzeug 3 oder Komponenten des Kraftfahrzeugs 3 unter Einsatz des Fahrerassistenzsystems 2 zu betreiben. Beim Fahrzeugprüfstand 4 handelt es sich vorzugsweise um einen Rollenprüfstand oder Antriebsstrangprüfstand mit einer Rademulationseinrichtung. Weiter weist ein solcher Prüfstand einen Witterungssimulator auf, der eine Temperierungseinrichtung und eine Fahrtwindemulationseinrichtung aufweist.

Anhand des Fahrzeugprüfstands 4 kann das Kraftfahrzeug 3 unter genau kontrollierten Bedingungen betrieben werden. Beispielsweise kann auf die drehbar gelagerte Rademulationseinrichtung ein Moment aufgebracht werden, wodurch unterschiedliche Beladungen des Kraftfahrzeugs 3, unterschiedliche Fahrbahnverhältnisse und/oder dergleichen simulierbar sind. Alternativ oder zusätzlich können unterschiedliche Witterungsbedingungen simuliert werden, etwa indem die Temperierungseinrichtung verschiedene Temperaturen und/oder die Fahrtwindemulationseinrichtung verschiedene Windströmungen bereitstellt.

Um die Umgebung zu erfassen weist das Kraftfahrzeug 3 wenigstens einen Umgebungssensor 6d, 6e auf, der dazu eingerichtet ist eine physikalische Messgröße, insbesondere ein Messsignal, zu erfassen und in ein Sensorsignal umzuwandeln. Ein Umgebungssensor 6a, 6b, 6c, 6d, 6e, insbesondere des Kraftfahrzeugs 3, ist vorzugsweise als ein Ultraschallsensor, ein Radarsensor, ein Lidarsensor, eine Kamera oder als ein GPS-Empfänger ausgebildet. In dem gezeigten Ausführungsbeispiel weist das Kraftfahrzeug 3 beispielhaft eine Kamera 6d und einen Radarsensor 6e auf.

Vorzugsweise ist der Umgebungssensor 6a, 6b, 6c, 6d, 6e dazu eingerichtet, ein Messsignal, vorzugsweise Schallwellen oder elektromagnetische Wellen, zur Erfassung der Umgebung auszusenden. Dieses Messsignal, beispielsweise ein Ultraschallsignal, wechselwirkt mit der Umgebung und wird dabei von der Umgebung beeinflusst. Das beeinflusste Messsignal kann von dem wenigstens einen Umgebungssensor empfangen bzw. erfasst werden und auf dessen Grundlage ein Sensorsignal erzeugt werden, welche die Umgebung des Kraftfahrzeugs 3 charakterisieren. Die Wechselwirkung entspricht dabei beispielsweise einer Reflexion, einer Transmission und/oder einer zumindest teilweisen Absorption des Messsignals an bzw. von Objekten aus der Umgebung des Kraftfahrzeugs 3.

Eine Steuerungseinheit 7 des Fahrerassistenzsystems 2 ist in Figur 1 beispielhaft mit einem ersten Umgebungssensor 6d des Kraftfahrzeugs 3 und einem zweiten Umgebungssensor 6e des Kraftfahrzeugs 3 verbunden. Um das Fahrerassistenzsystem 2 in einer genau kontrollierten Umgebung analysieren zu können, ist ein erstes Simulationsmodul 8a und ein zweites Simulationsmodul 8b mit der Steuerungseinheit 7 verbunden, um ein Umgebungsszenario, insbesondere eine Fahrzeugumgebung bzw. eine Fahrsituation für das Fahrerassistenzsystem zu simulieren. Das erste Simulationsmodul 8a weist einen ersten Umgebungssensor 6a und eine diesem zugeordnete erste Stimulationseinrichtung 9a auf. Das zweite Simulationsmodul 8b weist einen zweiten Umgebungssensor 6b mit einer diesem zugeordneten zweiten Stimulationseinrichtung 9b und zwei dritte Umgebungssensoren 6c mit zwei diesen jeweils zugeordneten dritten Stimulationseinrichtungen 9c auf.

Die Steuerungseinheit 7 ist dazu eingerichtet, Sensorsignale wenigstens eines Umgebungssensors 6a, 6b, 6c, 6d, 6e zu verarbeiten. Eine Verbindung zur Signalübertragung zwischen der Steuerungseinheit 7 und den Umgebungssensoren 6a, 6b, 6c, 6d, 6e kann drahtlos oder drahtgebunden ausgebildet sein. Bevorzugt ist der mindestens eine Umgebungssensor 6a, 6b, 6c, 6d, 6e mit der Steuerungseinheit 7 mittels eines Bussystems verbunden, weiter bevorzugt mittels eines Feldbusses.

Die Simulationseinrichtung 9a, 9b, 9c ist dazu eingerichtet, den Umgebungssensor 6a, 6b, 6c derart zu stimulieren, dass das von ihm erzeugte Sensorsignal Wechselwirkungen des Kraftfahrzeugs 3 mit seiner Umgebung und/oder Einflüsse der Umgebung auf das Kraftfahrzeug 3 simuliert. Hierzu kann die Stimulationseinrichtung 9a, 9b, 9c ein, insbesondere von dem Umgebungssensor 6a, 6b, 6c ausgesandtes, Messignal beeinflussen, oder dem Umgebungssensor 6a, 6b, 6c ein von diesem zu erfassendes Messignal zur Verfügung stellen. Das Sensorsignal des Umgebungssensors 6a, 6b, 6c des Simulationsmoduls 8a, 8b ersetzt vorzugsweise das Sensorsignal des Umgebungssensors 6d, 6e des Kraftfahrzeugs 3 zur Verarbeitung durch die Steuerungseinheit 7.

Das Simulationsmodul 8a, 8b ist unabhängig und beabstandet von dem Kraftfahrzeug 3 und/oder dem Fahrzeugprüfstand 4 angeordnet und betreibbar, insbesondere in einem anderen Raum. In einem weiteren bevorzugten Ausführungsbeispiel ist der Fahrzeugprüfstand 4 in einer Prüfzelle angeordnet und das oder die Simulationsmodule 8a, 8b sind außerhalb dieser Prüfzelle angeordnet. Insbesondere können Komponenten und/oder Simulationsmodule des Systems im Rahmen eines sogenannten vernetzten Prüfstands vollständig geographisch getrennt vorhanden sein, beispielsweise sogar in verschiedenen Ländern angeordnet sein.

Vorzugsweise ist das Simulationsmodul 8a, 8b ausschließlich über eine Datenverbindung mit der Steuerungseinheit 7 verbunden. Insbesondere ist das Simulationsmodul 8a, 8b derart zu dem Kraftfahrzeug 3 und/oder dem Fahrzeugprüfstand angeordnet, dass Bewegungen und oder Kräfte, die bei dem Betrieb des Kraftfahrzeugs 3 durch den Fahrzeugprüfstand 4 wirken, nicht auf das Simulationsmodul 8a, 8b übertragen werden. Somit sind auch der Umgebungssensor 6a, 6b, 6c und die zugeordnete, insbesondere hoch empfindliche, Stimulationseinrichtung 9a, 9b, 9c des Simulationsmodul 8a, 8b vor physischen Störeinwirkungen durch Kräfte und Bewegungen des Kraftfahrzeugs 3 oder des Fahrzeugprüfstands 4 geschützt.

Vorzugsweise umfasst das Simulationsmodul 8a, 8b den wenigstens einen Umgebungssensor 6a, 6b, 6c und die wenigstens eine zugeordnete Stimulationseinrichtung 9a, 9b, 9c vollständig oder weist ein Gehäuse auf, in welchem der wenigstens eine Umgebungssensor 6a, 6b, 6c und die wenigstens eine zugeordnete Stimulationseinrichtung 9a, 9b, 9c angeordnet sind. Dadurch wird das Simulationsmodul 8a, 8b, insbesondere die empfindliche Stimulationseinrichtung 9a, 9b, 9c vor Verschmutzungen und Feuchtigkeit geschützt. Vorzugsweise weist das Simulationsmodul 8a, 8b einen Absorber, insbesondere in Form einer signalabsorbierenden Beschichtung, auf, welcher zur Absorption von Messsignalen und/oder Isolation der Komponenten des Simulationsmoduls 8a,8b ausgebildet ist.

In dem gezeigten Ausführungsbeispiel ist der erste Umgebungssensor 6d des Kraftfahrzeugs 3 als Kamera ausgebildet. Um eine Umgebungssimulation auf Basis von Sensorsignalen abzubilden und die Sensorsignale der Kamera 6d des Kraftfahrzeugs 3 für die Steuerungseinheit 7 zu ersetzen, ist der erste Umgebungssensor 6a des ersten Simulationsmoduls 8a ebenfalls als Kamera ausgebildet, insbesondere als identische Kamera. Dieser Kamera 6a ist die erste Stimulationseinrichtung 9a zugeordnet, vorzugsweise derart, dass ein notwendiger Mindestabstand für eine Kamerastimulation eingehalten ist. Die Stimulationseinrichtung 9a ist dazu eingerichtet, der Kamera 6a ein simuliertes Umgebungsbild, insbesondere zur Erfassung durch eine Optik der Kamera 6a, bereitzustellen. Die Kamera 6a ist dazu eingerichtet das Umgebungsbild zu erfassen und in ein Sensorsignal umzuwandeln. Dieses Sensorsignal kann dann von der Steuerungseinrichtung 7 anstelle des Sensorsignals der Kamera 6d des Kraftfahrzeugs 3 verarbeitet werden.

In einem weiteren bevorzugten Ausführungsbeispiel ist der Umgebungssensor 6d des Kraftfahrzeugs 3 als Stereokamera mit zwei Objektiven ausgebildet. In bevorzugter Weise ist in einem Simulationsmodul 8a, 8b eine gleichartige, insbesondere identische, Stereokamera 6a, 6b, 6c angeordnet, wobei in jedem der zwei Objektive der Stereokamera jeweils eine Stimulationseinrichtung 9a, 9b, 9c zugeordnet ist. Durch das Vorsehen der Stereokamera in einem Simulationsmodul 8a, 8b, können die Stimulationseinrichtungen 9a, 9b, 9c in geeigneter Weise zu beiden Objektiven der Stereokamera zugeordnet werden, ohne der Einbausituation am Kraftfahrzeug 3 Rechnung tragen zu müssen.

Das zweite Simulationsmodul 8b weist ein Bauteil 10 auf, in diesem Ausführungsbeispiel eine Stoßstange, welche in dem Simulationsmodul 8b montiert ist. In der Stoßstange 10 sind drei Umgebungssensoren 6b, 6c angeordnet, denen jeweils eine geeignete Stimulationseinrichtung 9b, 9c zugeordnet ist. Beispielhaft sind die beiden äußeren Umgebungssensoren 6c als Umgebungssensoren nach einem ersten Messprinzip, insbesondere als Radarsensoren, der innere Umgebungssensor 6b als Umgebungssensor nach einem zweiten Messprinzip, insbesondere als Lidarsensor ausgebildet.

Die Stoßstange 10, welche in dem zweiten Simulationsmodul montiert ist, ist vorzugsweise eine Stoßstange für das Kraftfahrzeug 3 auf dem Fahrzeugprüfstand 4, insbesondere bestückt mit bau- und/oder funktionsgleichen, vorzugsweise identischen, Umgebungssensoren 6b, 6c wie die Stoßstange des Kraftfahrzeugs 3.

Alternativ oder zusätzlich kann auch vorgesehen sein, die Stoßstange 10 und/oder ein anderes Bauteil 10 des Kraftfahrzeugs 3 welches sich auf dem Fahrzeugprüfstand 4 befindet, insbesondere samt darin vorgesehenen Umgebungssensoren 6e, zu demontieren und dieses Bauteil 10, insbesondere samt darin vorgesehenen Umgebungssensoren 6b, 6c in oder an dem zweiten Sensormodul 8b zu montieren.

Die Verwendung von Umgebungssensoren 6a, 6b, 6c, 6d, 6e in einer Einbausituation, insbesondere in dem betreffenden Bauteil 10, wie in dem Kraftfahrzeug 3, ermöglicht insbesondere eine realitätsnahe Analyse von Wechselwirkungen zwischen einzelnen Umgebungssensoren 6a, 6b, 6c, 6d, 6e bzw. Sensorsystemen aus mehreren Umgebungssensoren 6a, 6b, 6c, 6d, 6e.

In einem weiteren Ausführungsbeispiel kann das System mehrere Simulationsmodule 8b aufweisen, die mit den gleichen Bauteilen 10 mit, insbesondere mehreren, Umgebungssensoren 6b, 6c bestückt sind. Somit können beispielsweise in einem ersten Simulationsmodul 8b nur Umgebungssensoren 6b eines ersten Messprinzips und in einem zweiten Simulationsmodul 9b nur Umgebungssensoren 6c eines zweiten Messprinzips vorgesehen sein und/oder betrieben werden. Dadurch können insbesondere Wechselwirkungen der Umgebungssensoren 6b, 6c, insbesondere innerhalb einer Simulationseinrichtung 9b, und somit Simulationsfehler vermieden werden.

Grundsätzlich sind in weiteren Ausführungsbeispielen eines erfindungsgemäßen Systems 1 Kombinationen aus einer beliebigen Anzahl, insbesondere verschieden ausgebildeter, Simulationsmodule 8a, 8b denkbar, um ein umfassendes Testen des Fahrerassistenzsystems 2 zu ermöglichen.

In einem weiteren Ausführungsbeispiel kommt das Simulationsmodul 8a, 8b nicht am Fahrzeugprüfstand, sondern auf einer Teststrecke zum Einsatz. In diesem Fall ist das Simulationsmodul 8a, 8b vorzugsweise im Innenraum des Kraftfahrzeugs 3 anordenbar, insbesondere im Kofferraum.

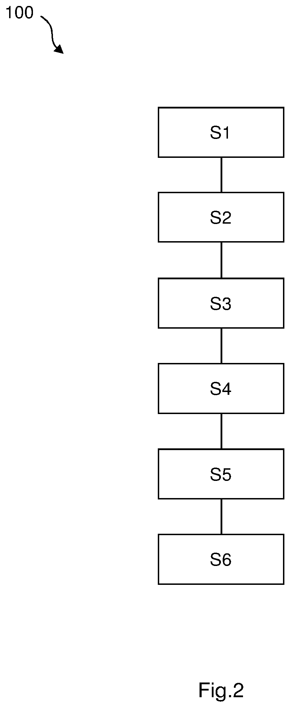

**Figur** 2 zeigt ein bevorzugtes Ausführungsbeispiel eines erfindungsgemäßen Verfahrens 100 zum Testen eines Fahrerassistenzsystem 2 eines Kraftfahrzeugs 3.

In einem optionalen Verfahrensschritt S1 wird mindestens ein Bauteil 10 des Kraftfahrzeugs 3 mit mindestens einem darin angeordneten und/oder verbauten Umgebungssensor 6d, 6e von dem Kraftfahrzeug 3 demontiert, um ein Montieren dieses Bauteils 10 in das Simulationsmodul 8a, 8b zu ermöglichen. Dieser Schritt S1 kann entfallen, falls kein Bauteil 10 oder ein Bauteil 10, welches nicht von dem Kraftfahrzeug 3 stammt, in dem Simulationsmodul 8 montiert werden soll. Alternativ oder zusätzlich kann vorgesehen sein, einen Umgebungssensor 6d, 6e des Kraftfahrzeugs 3 zu demontieren.

In einem Verfahrensschritt S2 wird ein Bauteil 10, bevorzugt ein Bauteil 10 des Kraftfahrzeugs 3, besonders bevorzugt das Bauteil 10 welches in dem Verfahrensschritt S1 von dem Kraftfahrzeug 3 demontiert wurde, in oder an dem wenigstens einen Simulationsmodul 8a, 8b montiert. Das Bauteil 10 weist dabei mindestens einen darin angeordneten und/oder verbauten Umgebungssensor 6a, 6b, 6c, 6d, 6e auf.

Alternativ oder zusätzlich wird wenigstens ein Umgebungssensor 6a, 6b, 6c, 6d, 6e, welcher nicht in einem Bauteil 10 verbaut ist, an oder in dem wenigstens einen Simulationsmodul 8a, 8b montiert. Insbesondere ist oder wird jeder der Umgebungssensoren 6a, 6b, 6c, welcher in dem Simulationsmodul 8a, 8b montiert wird, zur Übertragung von Sensorsignalen mit der Steuerungseinheit 7 verbunden.

Werden in dem Simulationsmodul 8a, 8b ausschließlich Umgebungssensoren 6a, 6b, 6c montiert, die nicht diejenigen des Kraftfahrzeugs 3, sind, so können die entsprechenden Umgebungssensoren 6d, 6e des Kraftfahrzeugs 3 deaktiviert werden. In anderen Worten können diejenigen Umgebungssensoren 6d, 6e, deren Sensorsignale mittels des Simulationsmodul 8a, 8b ersetzt werden, von der Steuerungseinheit 7 abgeklemmt werden, oder diese Sensorsignale für die Verarbeitung durch die Steuerungseinheit 7 stumm geschaltet werden. So kann ein Störeinfluss der Umgebungssensoren 6d, 6e des Kraftfahrzeugs 3 auf die Steuerungseinheit 7 und somit auf das Fahrerassistenzsystem 2 minimiert werden.

In einem Verfahrensschritt S3 wird dem wenigstens einen Umgebungssensor 6a, 6b, 6c, der in dem Simulationsmodul 8a, 8b montiert ist, eine Stimulationseinrichtung 9a, 9b, 9c zugeordnet. Vorzugsweise ist jedem Umgebungssensor 6a, 6b, 6c in dem Simulationsmodul 8a, 8b eine Stimulationseinrichtung 9a, 9b, 9c zugeordnet. Alternativ kann eine Stimulationseinrichtung 9a, 9b mehreren Umgebungssensoren 6a, 6b, 6c, insbesondere Umgebungssensoren 6a, 6b, 6c die auf einem gleichen Messprinzip beruhen, zugeordnet sein, um diese zu stimulieren. Das funktionsgemäße Zuordnen der Stimulationseinrichtung 9a, 9b, 9c zu dem Umgebungssensor 6a, 6b, 6c ist vereinfacht, da der Umgebungssensor 6a, 6b, 6c frei zugänglich, insbesondere nicht durch seine Einbausituation im Kraftfahrzeug 3 verdeckt, in dem Simulationsmodul 8a, 8b angeordnet ist. Eine Ausrichtung von Umgebungssensor 6a, 6b, 6c und Stimulationseinrichtung 9a, 9b, 9c ist somit auf präzise Weise möglich.

Vorzugsweise wird in einem optionalen weiteren Schritt der wenigstens eine Umgebungssensor 6a, 6b, 6c und/oder die Stimulationseinrichtung 9a, 9b, 9c kalibriert. Kalibrieren im Sinne der Erfindung bedeutet, dass ein von einem Umgebungssensor 6a, 6b, 6c angezeigter Messwert mit einem vorgegebenen Bezugswert verglichen wird. Das Kalibrieren beinhaltet insbesondere ein Dokumentieren einer Messabweichung und eine Berechnung einer Messunsicherheit und findet vorzugsweise unter vorbestimmten Referenzbedingungen statt. Dabei sind vorzugsweise keine technischen Eingriffe am Umgebungssensor 6a, 6b, 6c und/oder der Stimulationseinrichtung 9a, 9b, 9c erforderlich. Weiter bevorzugt wird in einem optionalen weiteren Schritt die wenigstens eine Stimulationseinrichtung 9a, 9b, 9c gegenüber dem wenigstens einen Umgebungssensor 6a, 6b, 6c, oder umgekehrt, räumlich justiert bzw. ausgerichtet, um eine optimale Betriebsposition zu erreichen.

In einem Verfahrensschritt S4 wird eine Testumgebung mittels wenigstens eines Simulationsmoduls 8a, 8b simuliert. Der wenigstens eine Umgebungssensor 6a, 6b, 6c des wenigstens einen Simulationsmoduls 8a, 8b wird auf Basis eines simulierten Umgebungsszenarios stimuliert. Hierzu moduliert die Stimulationseinrichtung 9a, 9b, 9c vorzugsweise ein von dem Umgebungssensor Umgebungssensoren 6a, 6b, 6c ausgesandtes Messignal und stellt dieses dem Umgebungssensor oder den Umgebungssensoren 6a, 6b, 6c zum Erfassen zur Verfügung. Alternativ kann ein Messignal zur Simulation eines Umgebungsszenarios in Form eines Messignals, beispielsweise in Form von GPS-Daten oder eines simulierten Bilds durch die Stimulationseinrichtung 9a, 9b, 9c bereitgestellt werden. Insbesondere ist die Stimulationseinrichtung 9a, 9b, 9c dazu eingerichtet, den Umgebungssensor Umgebungssensoren 6a, 6b, 6c in der Art und Weise zu stimulieren, dass diesem die Umgebung aus der Perspektive des Umgebungssensors 6d, 6e des Kraftfahrzeugs 3 dargestellt wird.

In einem weiteren Verfahrensschritt S5 wird ein Sensorsignal zur Verarbeitung durch eine Steuerungseinheit 7 des Fahrerassistenzsystems 2 erzeugt. Dieses Sensorsignal wird mittels des wenigstens einen Simulationsmoduls 8a, 8b erzeugt und anstelle eines Sensorsignals von wenigstens einem Umgebungssensor 6d, 6e des Kraftfahrzeugs 3 von der Steuerungseinheit 7 verarbeitet. Somit können von dem wenigstens einen Simulationsmodul 8a, 8b Sensorsignale erzeugt werden, die das simulierte Umgebungsszenario charakterisieren.

In einem weiteren Verfahrensschritt S6 wird wenigstens ein Antriebsstrang 5 des Kraftfahrzeugs 3 auf dem Fahrzeugprüfstand 4 unter Einsatz des Fahrerassistenzsystems 2 auf der Grundlage des wenigstens einen Sensorsignals des wenigstens einen Sensormoduls 8a, 8b betrieben. Alternativ wird das Kraftfahrzeug 3 auf einer Teststrecke unter Einsatz des Fahrerassistenzsystems 2 auf der Grundlage des wenigstens einen Sensorsignals des wenigstens einen Sensormoduls 8a, 8b betrieben. In beiden Fällen können zusätzlich weitere Sensorsignale durch reale und/oder simulierte Sensoren erzeugt und zur Verarbeitung durch die Steuerungseinheit 7 und vorzugsweise zum Betreiben des Fahrerassistenzsystems 2 und/oder des Antriebsstrangs 5 und/oder des Kraftfahrzeugs 3 verwendet werden.

Außerdem sei darauf hingewiesen, dass es sich bei den Ausführungsbeispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: System
- 2: Fahrerassistenzsystem
- 3: Kraftfahrzeug
- 4: Fahrzeugprüfstand
- 5: Antriebsstrang
- 6a, 6b, 6c,6d, 6e: Umgebungssensor
- 7: Steuerungseinheit
- 8a, 8b: Simulationsmodul
- 9a, 9b, 9c: Stimulationseinrichtung
- 10: Bauteil
- S1: Demontieren eines Bauteils
- S2: Montieren eines Umgebungssensors
- S3: Zuordnen einer Stimulationseinrichtung
- S4: Simulieren einer Testumgebung
- S5: Erzeugen eines Sensorsignals
- S6: Betreiben eines Antriebsstrangs

## Patentansprüche

1. System (1) zum Testen eines Fahrerassistenzsystems (2) eines Kraftfahrzeugs (3),
wobei das Fahrerassistenzsystem (2) eine Steuerungseinheit (7) zur Verarbeitung von Sensorsignalen aufweist, welche eingerichtet ist, Sensorsignale wenigstens eines Umgebungssensors (6a, 6b, 6c, 6d, 6e) des Kraftfahrzeugs (3) zu verarbeiten, wobei der wenigstens eine Umgebungssensor (6a, 6b, 6c, 6d, 6e) dazu eingerichtet ist, Umgebungsinformationen zu erfassen und in Sensorsignale umzuwandeln,
wobei das System (1) aufweist:
einen Fahrzeugprüfstand (4), in der Weise eingerichtet, dass ein Antriebsstrang (5) des Kraftfahrzeugs (3) betrieben werden kann;
wenigstens ein von dem Kraftfahrzeug (3) räumlich getrenntes Simulationsmodul (8a, 8b), wobei das Simulationsmodul (8a, 8b) wenigstens einen Umgebungssensor (6a, 6b, 6c, 6d, 6e) aufnimmt oder aufnehmen kann und eine diesem Umgebungssensor (6a, 6b, 6c, 6d, 6e) zugeordnete Stimulationseinrichtung (9a, 9b, 9c) aufweist;
wobei das Simulationsmodul als eine von dem Kraftfahrzeug oder dem Fahrzeugprüfstand unabhängige bauliche Einheit des Systems ausgebildet ist,
wobei der vom Simulationsmodul (8a, 8b) aufgenommene oder aufnehmbare Umgebungssensor (6a, 6b, 6c, 6d, 6e), insbesondere funktional und/oder strukturell, dem wenigstens einen Umgebungssensor (6a, 6b, 6c, 6d, 6e) des Kraftfahrzeugs entspricht oder der wenigstens eine Umgebungssensor (6a, 6b, 6c, 6d, 6e) des Kraftfahrzeugs (3) ist; und
wobei das Simulationsmodul (8a, 8b) zur Signalübertragung mit der Steuerungseinheit (7) des Fahrerassistenzsystems (2) verbunden ist, um ein Sensorsignal von dem Simulationsmodul (8a, 8b) an die Steuerungseinheit (7) zu übertragen.

2. System (1) nach Anspruch 1, wobei das Simulationsmodul (8a, 8b) ausgebildet ist, Sensorsignale zu erzeugen, die Umgebungsinformationen aus der Perspektive des Umgebungssensors (6a, 6b, 6c, 6d, 6e) des Kraftfahrzeugs (3) abbilden.

3. System (1) nach Anspruch 1 oder 2, wobei das Simulationsmodul (8a, 8b) ausschließlich mittels einer Verbindung zur Signalübertragung mit der Steuerungseinheit (7) des Fahrerassistenzsystems (2) verbunden ist, vorzugsweise mittels eines Leitungskabels, eines Bussystems, insbesondere eines Feldbusses, und/oder mittels einer drahtlosen Verbindung.

4. System (1) nach einem der Ansprüche 1 bis 3, wobei der vom Simulationsmodul (8a, 8b) aufnehmbare oder aufgenommene Umgebungssensor (6a, 6b, 6c, 6d, 6e) mit dem von ihm ersetzten Umgebungssensor (6a, 6b, 6c, 6d, 6e) des Fahrerassistenzsystems (2) identisch ist.

5. System (1) nach einem der Ansprüche 1 bis 4, wobei das System (1) zumindest zwei Simulationsmodule (8a, 8b) aufweist oder aufnehmen kann, wobei sich wenigstens zwei dieser Simulationsmodule in dem von ihnen aufgenommenen Umgebungssensoren (6a, 6b, 6c, 6d, 6e) angewandten Messprinzip unterscheiden.

6. System (1) nach einem der Ansprüche 1 bis 5, wobei das wenigstens eine Simulationsmodul (8a, 8b) zumindest zwei Umgebungssensoren (6a, 6b, 6c, 6d, 6e) aufweist oder aufnehmen kann, wobei sich wenigstens zwei dieser Umgebungssensoren (6a, 6b, 6c, 6d, 6e) in dem von ihnen angewandten Messprinzip unterscheiden.

7. System (1) nach einem der Ansprüche 1 bis 6, wobei der wenigstens eine Umgebungssensor (6a, 6b, 6c, 6d, 6e) in einem Bauteil (10), insbesondere einem Bauteil (10) des Kraftfahrzeugs (3), vorzugsweise der Karosserie des Kraftfahrzeugs (3), angeordnet und/oder verbaut ist, und dieses Bauteil (10) von dem wenigstens einen Simulationsmodul (8a, 8b) aufnehmbar oder aufgenommen ist.

8. System (1) nach einem der Ansprüche 1 bis 7, wobei das Simulationsmodul (8a, 8b), insbesondere der von dem Simulationsmodul (8a, 8b) aufgenommene oder aufnehmbare Umgebungssensor (6a, 6b, 6c, 6d, 6e) und die Stimulationseinrichtung (9a, 9b, 9c), als bauliche Einheit ausgeführt, vorzugsweise von einem Gehäuse umfasst ist bzw. sind.

9. System (1) nach einem der Ansprüche 1 bis 8, wobei die Stimulationseinrichtung (9a, 9b, 9c) eingerichtet ist, vorzugsweise basierend auf einem Signal, welches von dem wenigstens einen von der Simulationseinrichtung (9a, 9b, 9c) aufgenommenen Umgebungssensor (6a, 6b, 6c, 6d, 6e) ausgesendet wird, ein Antwortsignal für den Empfang durch diesen Umgebungssensor (6a, 6b, 6c, 6d, 6e) zu erzeugen, wobei das Antwortsignal vorzugsweise basierend auf einer simulierten Testumgebung erzeugt wird.

10. System (1) nach einem der Ansprüche 1 bis 9, wobei das System (1) wenigstens einen Signalumwandler, insbesondere einen Perception-Chip einer Kamera, wenigstens eines weiteren Umgebungssensors (6a, 6b, 6c, 6d, 6e), aufweist, welcher eingerichtet ist, ein Sensorsignal an die Steuerungseinrichtung (7) des Kraftfahrzeugs (3) zu übertragen und das Sensorsignal auf Basis von Sensorrohdaten zu erzeugen, wobei die Sensorrohdaten in den Signalumwandler eingespeist werden und dieser das Sensorsignal erzeugt.

11. System (1) nach einem der Ansprüche 1 bis 10, wobei das System (1) wenigstens eine Vorrichtung aufweist, die dazu eingerichtet ist, ein simuliertes Sensorsignal, insbesondere in Form von Objektlisten und/oder Objektdaten, zu erzeugen, und an die Steuerungseinheit (7) des Fahrerassistenzsystems (2) zu übertragen.

12. Verfahren (100) zum Testen eines Fahrerassistenzsystems (2) eines Kraftfahrzeugs (3) auf einem Fahrzeugprüfstand (4), insbesondere mittels eines Systems (1) nach einem der vorhergehenden Ansprüche, aufweisend die folgenden Schritte:
- Simulieren (S4) einer Testumgebung mittels wenigstens eines Simulationsmoduls (8a, 8b), wobei das Simulationsmodul wenigstens einen Umgebungssensor (6a, 6b, 6c, 6d, 6e) des Kraftfahrzeugs (30) aufnimmt; wobei der aufgenommene Umgebungssensor (6a, 6b, 6c, 6d, 6e), insbesondere funktional und/oder strukturell, wenigstens einem Umgebungssensor (6a, 6b, 6c, 6d, 6e) des Kraftfahrzeugs entspricht oder der wenigstens eine Umgebungssensor (6a, 6b, 6c, 6d, 6e) des Kraftfahrzeugs (3) ist;
- Erzeugen (S5) eines Sensorsignals mittels des wenigstens einen Simulationsmoduls (8a, 8b) zur Verarbeitung durch eine Steuerungseinheit (7) des Fahrerassistenzsystems (2) des Kraftfahrzeugs (3); und
- Betreiben (S6) eines Antriebsstranges (5) des Kraftfahrzeugs (3) auf dem Fahrzeugprüfstand (4) unter Einsatz des Fahrerassistenzsystems (2) auf der Grundlage des mittels des wenigstens einen Simulationsmoduls (8a, 8b) erzeugten Sensorsignals.

13. Verfahren (100) zum Testen eines Fahrerassistenzsystems (2) eines Kraftfahrzeugs (3) auf einer Teststrecke, aufweisend die folgenden Schritte:
- Simulieren (S4) einer Testumgebung mittels wenigstens eines Simulationsmoduls (8a, 8b), wobei das Simulationsmodul wenigstens einen Umgebungssensor (6a, 6b, 6c, 6d, 6e) des Kraftfahrzeugs (30) aufnimmt; wobei der aufgenommene Umgebungssensor (6a, 6b, 6c, 6d, 6e), insbesondere funktional und/oder strukturell, wenigstens einem Umgebungssensor (6a, 6b, 6c, 6d, 6e) des Kraftfahrzeugs entspricht oder der wenigstens eine Umgebungssensor (6a, 6b, 6c, 6d, 6e) des Kraftfahrzeugs (3) ist
- Erzeugen (S5) eines Sensorsignals mittels des wenigstens einen Simulationsmoduls (8a, 8b) zur Verarbeitung durch eine Steuerungseinheit (7) des Fahrerassistenzsystems (2) des Kraftfahrzeugs (3); und
- Betreiben (S6) des Kraftfahrzeugs (3) auf der Teststrecke unter Einsatz des Fahrerassistenzsystems (2) auf der Grundlage des mittels des wenigstens einen Simulationsmoduls (8a, 8b) erzeugten Sensorsignals.

14. Verfahren (100) nach Anspruch 12 oder 13, zusätzlich aufweisend die Schritte:
- Montieren (S2) wenigstens eines Umgebungssensors (6a, 6b, 6c, 6d, 6e) an oder in dem wenigstens einen Simulationsmodul (8a, 8b); und
- Zuordnen (S3) einer Stimulationseinrichtung (9a, 9b, 9c) zu diesem Umgebungssensor (6a, 6b, 6c, 6d, 6e).

15. Verfahren (100) nach einem der Ansprüche 12 bis 14, aufweisend die Schritte:
- Demontieren (S1) eines Bauteils (10) des Kraftfahrzeugs (3) mit mindestens einem darin angeordneten und/oder verbauten Umgebungssensor (6a, 6b, 6c, 6d, 6e) von dem Kraftfahrzeug (3), um ein Montieren (S2) dieses Bauteils in das Simulationsmodul (8a, 8b) zu ermöglichen.
- Montieren (S2) eines Bauteils (10), insbesondere eines Bauteils (10) des Kraftfahrzeugs (3), mit mindestens einem darin angeordneten und/oder verbauten Umgebungssensor (6a, 6b, 6c, 6d, 6e) in oder an dem wenigstens einen Simulationsmodul (8a, 8b).

## Claims

1. System (1) for testing a driver assistance system (2) of a motor vehicle (3),
wherein the driver assistance system (2) has a control unit (7) for processing sensor signals, which is set up to process sensor signals from at least one environmental sensor (6a, 6b, 6c, 6d, 6e) of the motor vehicle (3), wherein the at least one environmental sensor (6a, 6b, 6c, 6d, 6e) is designed to detect environmental information and convert it into sensor signals,
wherein the system (1) comprises:
a vehicle test bench (4) designed in such a way that a drive train (5) of the motor vehicle (3) can be operated;
at least one simulation module (8a, 8b) spatially separated from the motor vehicle (3), wherein the simulation module (8a, 8b) accommodates or can accommodate at least one environmental sensor (6a, 6b, 6c, 6d, 6e) and has a stimulation device (9a, 9b, 9c) assigned to this environmental sensor (6a, 6b, 6c, 6d, 6e);
wherein the simulation module is designed as a structural unit of the system that is independent of the motor vehicle or the vehicle test bench,
wherein the environmental sensor (6a, 6b, 6c, 6d, 6e) received or receivable by the simulation module (8a, 8b) corresponds, in particular functionally and/or structurally, to the at least one environmental sensor (6a, 6b, 6c, 6d, 6e) of the motor vehicle or is the at least one environmental sensor (6a, 6b, 6c, 6d, 6e) of the motor vehicle (3); and
wherein the simulation module (8a, 8b) is connected to the control unit (7) of the driver assistance system (2) for signal transmission, in order to transmit a sensor signal from the simulation module (8a, 8b) to the control unit (7).

2. System (1) according to claim 1, wherein the simulation module (8a, 8b) is designed to generate sensor signals that represent environmental information from the perspective of the environmental sensor (6a, 6b, 6c, 6d, 6e) of the motor vehicle (3).

3. System (1) according to claim 1 or 2, wherein the simulation module (8a, 8b) is connected to the control unit (7) of the driver assistance system (2) exclusively by means of a connection for signal transmission, preferably by means of a cable, a bus system, in particular a field bus, and/or by means of a wireless connection.

4. System (1) according to one of claims 1 to 3, wherein the environmental sensor (6a, 6b, 6c, 6d, 6e) received or receivable by the simulation module (8a, 8b) is identical to the environmental sensor (6a, 6b, 6c, 6d, 6e) of the driver assistance system (2) that it replaces.

5. System (1) according to one of claims 1 to 4, wherein the system (1) has or can accommodate at least two simulation modules (8a, 8b), wherein at least two of these simulation modules differ in the measurement principle applied in the environmental sensors (6a, 6b, 6c, 6d, 6e) accommodated by them.

6. System (1) according to one of claims 1 to 5, wherein the at least one simulation module (8a, 8b) has or can accommodate at least two environmental sensors (6a, 6b, 6c, 6d, 6e), wherein at least two of these environmental sensors (6a, 6b, 6c, 6d, 6e) differ in the measurement principle applied by them.

7. System (1) according to one of claims 1 to 6, wherein the at least one environmental sensor (6a, 6b, 6c, 6d, 6e) is arranged and/or installed in a component (10), in particular a component (10) of the motor vehicle (3), preferably the body of the motor vehicle (3), and this component (10) can be accommodated or is accommodated by the at least one simulation module (8a, 8b).

8. System (1) according to one of claims 1 to 7, wherein the simulation module (8a, 8b), in particular the environmental sensor (6a, 6b, 6c, 6d, 6e) accommodated or accommodatable by the simulation module (8a, 8b) and the stimulation device (9a, 9b, 9c), is or are designed as a structural unit, preferably comprised in a housing.

9. System (1) according to one of claims 1 to 8, wherein the stimulation device (9a, 9b, 9c) is designed to transmit, preferably based on a signal emitted by the at least one environmental sensor (6a, 6b, 6c, 6d, 6e) to generate a response signal for reception by this environmental sensor (6a, 6b, 6c, 6d, 6e), wherein the response signal is preferably generated based on a simulated test environment.

10. System (1) according to one of claims 1 to 9, wherein the system (1) has at least one signal converter, in particular a perception chip of a camera, at least one further environmental sensor (6a, 6b, 6c, 6d, 6e), which is designed to transmit a sensor signal to the control device (7) of the motor vehicle (3) and to generate the sensor signal on the basis of raw sensor data, wherein the raw sensor data is fed into the signal converter and the latter generates the sensor signal.

11. System (1) according to one of claims 1 to 10, wherein the system (1) comprises at least one device that is designed to generate a simulated sensor signal, in particular in the form of object lists and/or object data, and to transmit it to the control unit (7) of the driver assistance system (2).

12. Method (100) for testing a driver assistance system (2) of a motor vehicle (3) on a vehicle test bench (4), in particular by means of a system (1) according to one of the preceding claims, comprising the following steps:
- simulating (S4) a test environment by means of at least one simulation module (8a, 8b), wherein the simulation module accommodates at least one environmental sensor (6a, 6b, 6c, 6d, 6e) of the motor vehicle (30); wherein the accommodated environmental sensor (6a, 6b, 6c, 6d, 6e) corresponds, in particular functionally and/or structurally, to at least one environmental sensor (6a, 6b, 6c, 6d, 6e) of the motor vehicle, or the at least one environmental sensor (6a, 6b, 6c, 6d, 6e) of the motor vehicle (3) is ;
- generating (S5) a sensor signal by means of the at least one simulation module (8a, 8b) for processing by a control unit (7) of the driver assistance system (2) of the motor vehicle (3); and
- operating (S6) a drive train (5) of the motor vehicle (3) on the vehicle test bench (4) using the driver assistance system (2) on the basis of the sensor signal generated by means of the at least one simulation module (8a, 8b).

13. Method (100) for testing a driver assistance system (2) of a motor vehicle (3) on a test track, comprising the following steps:
- simulating (S4) a test environment using at least one simulation module (8a, 8b), wherein the simulation module receives at least one environmental sensor (6a, 6b, 6c, 6d, 6e) of the motor vehicle (30); wherein the received environmental sensor (6a, 6b, 6c, 6d, 6e) corresponds, in particular functionally and/or structurally, to at least one environmental sensor (6a, 6b, 6c, 6d, 6e) of the motor vehicle, or the at least one environmental sensor (6a, 6b, 6c, 6d, 6e) of the motor vehicle (3) is
- generating (S5) a sensor signal by means of the at least one simulation module (8a, 8b) for processing by a control unit (7) of the driver assistance system (2) of the motor vehicle (3); and
- operating (S6) the motor vehicle (3) on the test track using the driver assistance system (2) based on the sensor signal generated by means of the at least one simulation module (8a, 8b).

14. Method (100) according to claim 12 or 13, additionally comprising the steps:
- mounting (S2) at least one environmental sensor (6a, 6b, 6c, 6d, 6e) on or in the at least one simulation module (8a, 8b); and
- assigning (S3) a stimulation device (9a, 9b, 9c) to this environmental sensor (6a, 6b, 6c, 6d, 6e).

15. Method (100) according to one of claims 12 to 14, comprising the steps:
- Dismantling (S1) a component (10) of the motor vehicle (3) with at least one environmental sensor (6a, 6b, 6c, 6d, 6e) arranged and/or installed therein from the motor vehicle (3) in order to enable mounting (S2) of this component in the simulation module (8a, 8b).
- Mounting (S2) a component (10), in particular a component (10) of the motor vehicle (3), with at least one environmental sensor (6a, 6b, 6c, 6d, 6e) arranged and/or installed therein in or on the at least one simulation module (8a, 8b).

## Revendications

1. Système (1) destiné à tester un système d'aide à la conduite (2) d'un véhicule à moteur (3),
dans lequel le système d'aide à la conduite (2) présente une unité de commande (7) destinée au traitement des signaux de capteur, qui est mise au point pour traiter les signaux de capteur d'au moins un capteur d'environnement (6a, 6b, 6c, 6d, 6e) du véhicule à moteur (3), dans lequel l'au moins un capteur d'environnement (6a, 6b, 6c, 6d, 6e) est mis au point pour détecter des informations d'environnement et les convertir en signaux de capteur,
dans lequel le système (1) présente :
un banc d'essai de véhicule (4) mis au point de telle manière qu'une chaîne cinématique (5) du véhicule à moteur (3) puisse fonctionner ;
au moins un module de simulation (8a, 8b) spatialement séparé du véhicule à moteur (3), dans lequel le module de simulation (8a, 8b) reçoit ou peut recevoir au moins un capteur d'environnement (6a, 6b, 6c, 6d, 6e) et présente un dispositif de stimulation (9a, 9b, 9c) associé audit capteur d'environnement (6a, 6b, 6c, 6d, 6e) ;
dans lequel le module de simulation est réalisé comme une unité modulaire du système indépendante du véhicule à moteur ou du banc d'essai de véhicule,
dans lequel le capteur d'environnement (6a, 6b, 6c, 6d, 6e) reçu ou pouvant être reçu par le module de simulation (8a, 8b) correspond à l'au moins un capteur d'environnement (6a, 6b, 6c, 6d, 6e) du véhicule à moteur ou est l'au moins un capteur d'environnement (6a, 6b, 6c, 6d, 6e) du véhicule à moteur (3), en particulier sur le plan fonctionnel et/ou structurel ; et
dans lequel le module de simulation (8a, 8b) est relié pour la transmission de signaux à l'unité de commande (7) du système d'aide à la conduite (2) pour transmettre un signal de capteur du module de simulation (8a, 8b) à l'unité de commande (7).

2. Système (1) selon la revendication 1, dans lequel le module de simulation (8a, 8b) est réalisé pour générer des signaux de capteur qui représentent des informations d'environnement du point de vue du capteur d'environnement (6a, 6b, 6c, 6d, 6e) du véhicule à moteur (3).

3. Système (1) selon la revendication 1 ou 2, dans lequel le module de simulation (8a, 8b) est exclusivement relié à l'unité de commande (7) du système d'aide à la conduite (2) au moyen d'une connexion pour la transmission de signaux, de préférence au moyen d'un câble de ligne, d'un système de bus, en particulier d'un bus de terrain, et/ou au moyen d'une connexion sans fil.

4. Système (1) selon l'une quelconque des revendications 1 à 3, dans lequel le capteur d'environnement (6a, 6b, 6c, 6d, 6e) pouvant être reçu ou reçu par le module de simulation (8a, 8b) est identique au capteur d'environnement (6a, 6b, 6c, 6d, 6e) qu'il remplace du système d'aide à la conduite (2).

5. Système (1) selon l'une quelconque des revendications 1 à 4, dans lequel le système (1) présente ou peut accueillir au moins deux modules de simulation (8a, 8b), dans lequel au moins deux desdits modules de simulation se distinguent par le principe de mesure appliqué par les capteurs d'environnement (6a, 6b, 6c, 6d, 6e) qu'ils intègrent.

6. Système (1) selon l'une quelconque des revendications 1 à 5, dans lequel l'au moins un module de simulation (8a, 8b) présente ou peut recevoir au moins deux capteurs d'environnement (6a, 6b, 6c, 6d, 6e), dans lequel au moins deux desdits capteurs d'environnement (6a, 6b, 6c, 6d, 6e) se distinguent par le principe de mesure qu'ils appliquent.

7. Système (1) selon l'une quelconque des revendications 1 à 6, dans lequel l'au moins un capteur d'environnement (6a, 6b, 6c, 6d, 6e) est disposé et/ou monté dans un composant (10), en particulier un composant (10) du véhicule à moteur (3), de préférence la carrosserie du véhicule à moteur (3), et ledit composant (10) peut être reçu ou est reçu par l'au moins un module de simulation (8a, 8b).

8. Système (1) selon l'une quelconque des revendications 1 à 7, dans lequel le module de simulation (8a, 8b), en particulier le capteur d'environnement (6a, 6b, 6c, 6d, 6e) reçu ou pouvant être reçu par le module de simulation (8a, 8b), et le dispositif de stimulation (9a, 9b, 9c), est ou sont conçus comme une unité modulaire, de préférence compris par un boîtier.

9. Système (1) selon l'une quelconque des revendications 1 à 8, dans lequel le dispositif de stimulation (9a, 9b, 9c) est mis au point pour générer, de préférence sur la base d'un signal qui est émis par l'au moins un capteur d'environnement (6a, 6b, 6c, 6d, 6e) reçu par le dispositif de simulation (9a, 9b, 9c), un signal de réponse destiné à être reçu par ledit capteur d'environnement (6a, 6b, 6c, 6d, 6e), dans lequel le signal de réponse est généré de préférence sur la base d'un environnement de test simulé.

10. Système (1) selon l'une quelconque des revendications 1 à 9, dans lequel le système (1) présente au moins un convertisseur de signaux, en particulier une puce de perception d'une caméra, au moins d'un autre capteur d'environnement (6a, 6b, 6c, 6d, 6e), qui est mis au point pour transmettre un signal de capteur au dispositif de commande (7) du véhicule à moteur (3) et pour générer le signal de capteur sur la base de données brutes de capteur, dans lequel les données brutes de capteur sont injectées dans le convertisseur de signaux, lequel génère le signal de capteur.

11. Système (1) selon l'une quelconque des revendications 1 à 10, dans lequel le système (1) présente au moins un équipement qui est mis au point pour générer un signal de capteur simulé, en particulier sous forme de listes d'objets et/ou de données d'objets, et pour le transmettre à l'unité de commande (7) du système d'aide à la conduite (2).

12. Procédé (100) de test d'un système d'aide à la conduite (2) d'un véhicule à moteur (3) sur un banc d'essai de véhicule (4), en particulier au moyen d'un système (1) selon l'une quelconque des revendications précédentes, présentant les étapes suivantes :
- la simulation (S4) d'un environnement de test au moyen d'au moins un module de simulation (8a, 8b), dans lequel le module de simulation reçoit au moins un capteur d'environnement (6a, 6b, 6c, 6d, 6e) du véhicule à moteur (30) ; dans lequel le capteur d'environnement (6a, 6b, 6c, 6d, 6e) reçu correspond au moins à un capteur d'environnement (6a, 6b, 6c, 6d, 6e) du véhicule à moteur, en particulier sur le plan fonctionnel et/ou structurel, ou est l'au moins un capteur d'environnement (6a, 6b, 6c, 6d, 6e) du véhicule à moteur (3) ;
- la génération (S5) d'un signal de capteur au moyen de l'au moins un module de simulation (8a, 8b) pour le traitement par une unité de commande (7) du système d'aide à la conduite (2) du véhicule à moteur (3) ; et
- le fonctionnement (S6) d'une chaîne cinématique (5) du véhicule à moteur (3) sur le banc d'essai de véhicule (4) en employant le système d'aide à la conduite (2), sur la base du signal de capteur généré au moyen de l'au moins un module de simulation (8a, 8b).

13. Procédé (100) de test d'un système d'aide à la conduite (2) d'un véhicule à moteur (3) sur une piste de test, présentant les étapes suivantes :
- la simulation (S4) d'un environnement de test au moyen d'au moins un module de simulation (8a, 8b), dans lequel le module de simulation reçoit au moins un capteur d'environnement (6a, 6b, 6c, 6d, 6e) du véhicule à moteur (30) ; dans lequel le capteur d'environnement (6a, 6b, 6c, 6d, 6e) reçu correspond à au moins un capteur d'environnement (6a, 6b, 6c, 6d, 6e) du véhicule moteur, en particulier sur le plan fonctionnel et/ou structurel, ou est l'au moins un capteur d'environnement (6a, 6b, 6c, 6d, 6e) du véhicule à moteur (3) ;
- la génération (S5) d'un signal de capteur au moyen de l'au moins un module de simulation (8a, 8b) pour le traitement par une unité de commande (7) du système d'aide à la conduite (2) du véhicule à moteur (3) ; et
- le fonctionnement (S6) du véhicule à moteur (3) sur la piste de test en employant le système d'aide à la conduite (2) sur la base du signal de capteur généré au moyen de l'au moins un module de simulation (8a, 8b).

14. Procédé (100) selon la revendication 12 ou 13, présentant en supplément les étapes :
- de montage (S2) d'au moins un capteur d'environnement (6a, 6b, 6c, 6d, 6e) sur ou dans l'au moins un module de simulation (8a, 8b) ; et
- d'association (S3) d'un dispositif de stimulation (9a, 9b, 9c) audit capteur envi-ronnemental (6a, 6b, 6c, 6d, 6e).

15. Procédé (100) selon l'une quelconque des revendications 12 à 14, présentant les étapes :
- de démontage (S1) d'un composant (10) du véhicule à moteur (3) avec au moins un capteur d'environnement (6a, 6b, 6c, 6d, 6e) disposé et/ou monté dans celui-ci du véhicule à moteur (3) pour permettre un montage (S2) dudit composant dans le module de simulation (8a, 8b) ;
- de montage (S2) d'un composant (10), en particulier d'un composant (10) du véhicule à moteur (3), avec au moins un capteur d'environnement (6a, 6b, 6c, 6d, 6e) disposé et/ou monté dans celui-ci dans ou sur l'au moins un module de simulation (8a, 8b).
